# EUROPEAN PATENT SPECIFICATION

(11) **EP 3 144 450 B1**
(45) Date of publication and mention of the grant of the patent: **05.12.2018**
(21) Application number: 14901670.1
(22) Date of filing: 21.10.2014
(51) Int. Cl.: E04G 17/04, B28B 7/00, E04G 11/10, E04G 17/07, E04G 11/06

(54) **CONNECTING CLAMP FOR CONSTRUCTION FORMWORK ASSEMBLING**
ANSCHLUSSKLEMME FÜR SCHALUNGEN
PINCE DE LIAISON POUR LE RACCORDEMENT DE COFFRAGES

(30) Priority: 09.09.2014 CN 201410454609
(43) Date of publication of application: 22.03.2017
(73) Proprietor: Guangzhou Yida Machinery Co., Ltd., Guangzhou, Guangdong 510000 (CN)
(72) Inventor: LIU, Chengwen, Guangzhou Guangdong 510000 (CN)
(74) Representative: Spittle, Mark Charles
(86) International application number: PCT/CN2014/089033
(87) International publication number: WO 2016/037401

(56) References cited:
- EP-A2- 0 304 950
- CN-A- 104 295 099
- CN-U- 202 787 980
- CN-U- 203 499 254
- CN-U- 203 654 741
- CN-U- 204 174 933
- DE-A1- 4 401 794
- DE-C1- 10 028 556
- DE-U1- 8 814 208
- JP-U- H0 742 840
- US-A- 5 369 851
- US-A1- 2004 168 391

## Description

### BACKGROUND OF THE PRESENT INVENTION

### Field of Invention

The present invention relates to a field of construction template or formwork connectors, and more particularly to a connecting clamp for template splicing.

### Description of Related Arts

Conventionally, construction formworks or templates, steel templates or wooden templates are mainly connected by ordinary bolt and nut-hole during assembling, which has significant shortcomings: construction is slow, template assembling quality is not guaranteed, and it is easy to be harmed at the construction site. Furthermore, the templates are easy to loosen themselves after shaking, which sometimes seriously affects the quality of concrete pouring. Many companies also adapt a sleeve clamp as disclosed in Chinese patent ZL99205850 3, comprising: two hooks on a main body, and two puller bolts with saddle boards disposed oppositely to the two hooks. During utilization, there need to be two corresponding holes on template frames, wherein the two hooks are inserted into the two holes, and the saddle boards are positioned on tops of the template frames, then the puller bolts are tightened. The biggest advantage of such connector is fast cover work, but there are still significant shortcomings: the template frames must have standardized holes, it is easy to be harmed at the construction site, the templates are easy to loosen themselves after shaking, and inner size requirements of the two hooks are strict. Furthermore, after repeated use, both the corresponding two holes on the template frames and the two hooks will suffer size errors due to wear, inevitably leading to poor template assembling quality which further lowers the quality of concrete pouring. Another example: Chinese patent ZL01271107.1 discloses a clamp comprising a wedge with wedge teeth, a left clamp unit and a right clamp unit both having racks. During utilization, the left clamp unit and the right clamp are positioned at corresponding positions on template frames. Meanwhile, the rack of the left clamp unit passes through a channel of the right clamp unit, and the wedge is inserted through a longitudinal hole of the channel for being engaged with the lateral rack. When fastening the wedge, the wedge teeth are engaged with the rack and move in a lateral direction due to a skewed tooth function, so as to drive the two clamp units to be tightly combined with each other. Biggest advantages of such clamp are: construction is fast, template assembling is reliable, and there is no need to drill hole on the template frames. However, there are disadvantages such as a high cost and so on. Again, Chinese patent ZL03137432 8 discloses a novel connector comprising a special-shaped board bolt and a corresponding T-shaped spring wedge plate. During utilization, the special-shaped board bolt passes through a connecting hole on a template frame, and a strip-like hole of the T-shaped spring wedge is sleeved on a bolt shoulder and is at an inner side face of a bolt head. After wedging, a wedge body is elastically bended. Biggest advantages are simple structure, easy construction, wear resistant, impact resistant, and a long life, while shortcomings are that the wedge body is easy to be worn due to elastic bending, and it is not easy to manually control a wedging force. During utilization, construction speed is affected by individually perforating and fastening, parts will be lost, and so on.

The document EP 0304950 A2 discloses a formwork clamp with all the features of the preamble of claim 1.

### SUMMARY OF THE PRESENT INVENTION

For overcoming the above problems and defects, the present invention provides a connecting clamp for template assembling, wherein a movable clamp is tightly combined with a fixer, and a combination structure of the movable clamp and the fixer forms the connecting clamp for template assembling, so as to overcoming defects of conventional technologies. There is no need to drill an assembling hole on a template frame, a structure is simple, utilization is convenient, it is fast to fastening and loosening, it is difficult to be damaged or lost, a cost is low, a life is long, the template is automatically positioned and leveled during clamp fastening, stress states during template assembling is sufficient, fastening is reliable, and an assembly quality is high.

Accordingly, in order to accomplish the above object, the present invention provides:
a connecting clamp for template assembling, according to claim 1, comprising: a left clamp unit and a right clamp unit, wherein the left clamp unit is rotatably connected to the right clamp unit through a shaft; clamping faces and positioning-correction faces corresponding to frames of templates are provided at front portions of both the left clamp unit and the right clamp unit; a fixer is provided at rear portions of the left clamp unit and the right clamp unit, wherein the fixer enables the front portions of the left clamp units and the right clamp unit to grip the frames of the templates.

The present invent may adapt different structures, the fixer comprises a hole drilled at the rear position of the left clamp unit, and a wedge being movable up and down and placed in the hole, wherein a side face of the wedge is corresponding to the rear portion of the right clamp unit, which moves down with the wedge for pushing the left clamp unit and the right clamp unit to rotate around the shaft, in such a manner that the front portions of the left clamp unit and the right clamp unit grip adjacent frames. Meanwhile, an opening of the hole of the left clamp unit extends upwards for forming a back plate which limits the wedge to move down. A pin hole is drilled at a bottom portion of the wedge, and a pin is installed in the pin hole for preventing the wedge from detaching from the hole. Alternatively, the fixer comprises a hole drilled at the rear position of the left clamp unit, and a cam being rotatable and placed in the hole, wherein the cam rotates in the hole for pushing the rear position of the right clamp unit to rotate around the shaft, in such a manner that the front portion of the right clamp unit grips adjacent frames. Meanwhile, a limiter for limiting a rotating range of the cam is placed at a side of the hole on the left clamping unit.

The present invention also comprises a reset device provided between the left clamp unit and the right clamp unit for keeping an opened state of the front portions when the fixer is activated. The reset device is a tension spring installed between the left clamp unit and the right clamp unit, wherein a first end of the tension spring is mounted on the rear portion of the left clamp unit, and a second end of the tension spring is mounted on the rear portion of the right clamp unit.

By using the present invention, adjacent aluminum templates are connected through a high-strength rotary buckle, main advantages are as follows.
1, Connection is stable. Slots and cams of side ribs of the aluminum templates cooperate with a clip of rotary buckle, wherein when a wedge of the rotary buckle bears a force and moves down along a hole, a beveled face of the wedge contacts with a right clamp unit of the rotary buckle, and rotates the right clamp unit counterclockwise around a shaft, in such a manner that the clip of the rotary buckle tightly contacts with the slots of the aluminum templates. The more a downward displacement of the wedge is, the more stable a connection between the templates will be. When it comes to iron pin connection, since the pin hole is easy to be worn. Therefore, after repeated use, connection between the templates will be looser and looser, and a gap between the templates will be larger and larger. On the contrary, the rotary buckle connection is tighter, more stable and safer than iron pin connection.
2, Assemble is easy and construction is fast. It is easy to assemble or disassemble the templates with just a hammer. During connecting the templates, the wedge of the rotary buckle is simply drawn and detached from the hole of the right clamp unit, and then a rear portion of the rotary buckle is strongly held for separating the left clamp unit and the right clamp unit. Meanwhile, the clip is placed in the slot of the template, and then the wedge is struck with the hammer, in such a manner that the two templates are tightly connected with each together. A disassemble process is just opposite to the assemble process. If the aluminum templates are connected with the iron pin, the iron pin is inserted into a pin hole on the side rib of the template, and then the wedge is inserted and tightly knocked into a slot of the iron pin, while the wedge must be bent by knocking, so as to prevent the iron pin from loosing. During detaching, the wedge must be knocked to be straight before loosing the iron pin. On the contrary, connection with the rotary buckle is easier and more convenient.
3, A service life is long. Connection with the iron pin needs to drill pin holes on side ribs of the templates, wherein a contact area between the iron pin and the template is small, and edges of the pin hole is easy to be damaged. However, there is no need to damage the structure such as drilling holes on the templates which are connected by the rotary buckle, wherein a force area of the side rib of the template is large and the template is not easy to be damaged. In comparison, the service life of the templates connected by the rotary buckle is longer than that by the iron pin.
4, The present invention is economical. The rotary buckle is casted by high-strength cast steel, which is not easy to be damaged and is able to be recycled. Secondly, connection with the rotary buckle provides a long service life to the templates, wherein utilization number is high and construction costs are greatly reduced. Because the pin hole of the templates connected by the iron pin are easy to worn, utilization number is lower than that of the templates connected by the rotary buckle. Furthermore, the wedge for fixing the iron pin must be replaced after several uses, so a recycle number is low. According to comprehensive comparison, connection with the rotary buckle is more affordable than connection with the iron pin. In addition, a recycling rate of aluminum templates is higher than that of wooden or iron-wooden templates, leading to lower construction costs.

Referring to the drawings, the present invention is further illustrated.

### BRIEF DESCRIPTION OF THE DRAWINGS

Fig. 1 is a perspective view of the present invention after assembling.
Fig. 2 is a bottom view of the present invention after assembling.
Fig. 3 is an A-A enlarged view of the present invention after assembling.
Fig. 4 is a B-B enlarged view of a template of the present invention.
Fig. 5 is a perspective view of an alternative, not forming part of the present invention.
Fig. 6 is an exploded view of the previous alternative, not forming part of the present invention.
Fig. 7 is a perspective view of an embodiment of the present invention.
Fig. 8 is an exploded view of the embodiment of the present invention.
Fig. 9 is a sectional view of the previous embodiment of the present invention.
Fig. 10 is a perspective view of another embodiment of the present invention.
Fig. 11 is a perspective view of an alternative, no forming part of the present invention.

### DETAILED DESCRIPTION OF THE PREFERRED EMBODIMENT

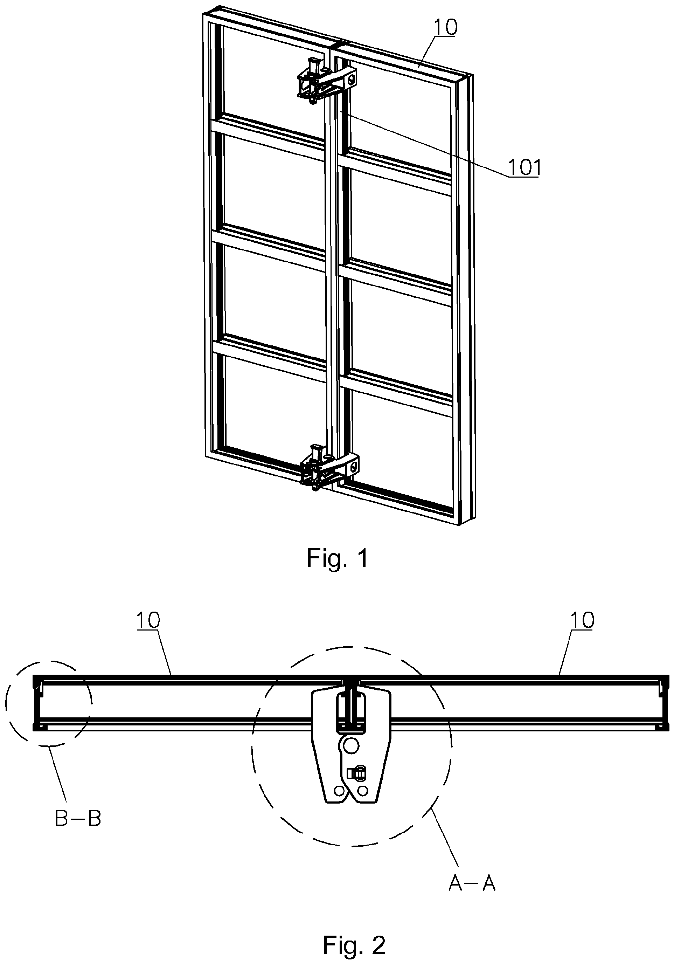

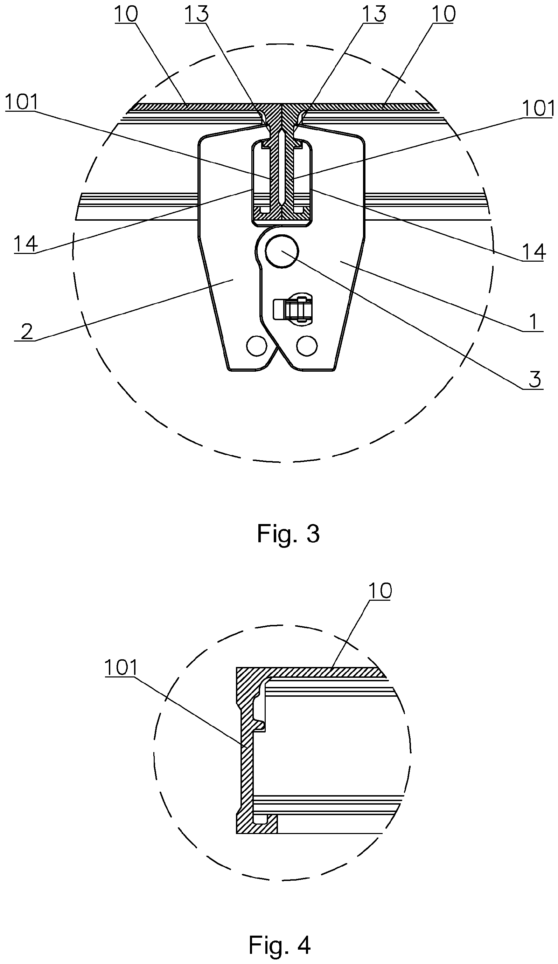

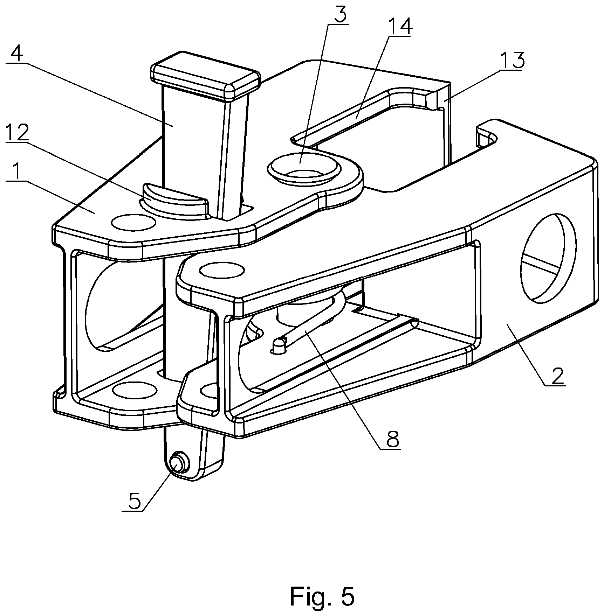

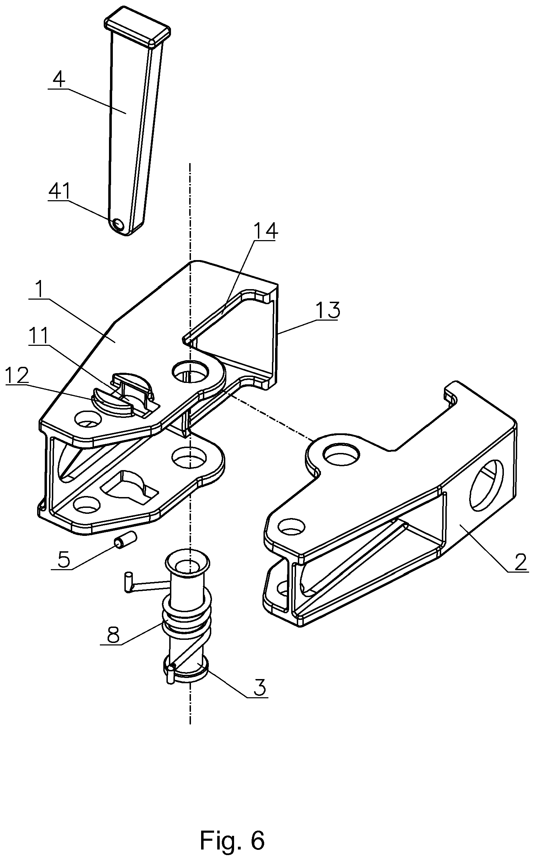

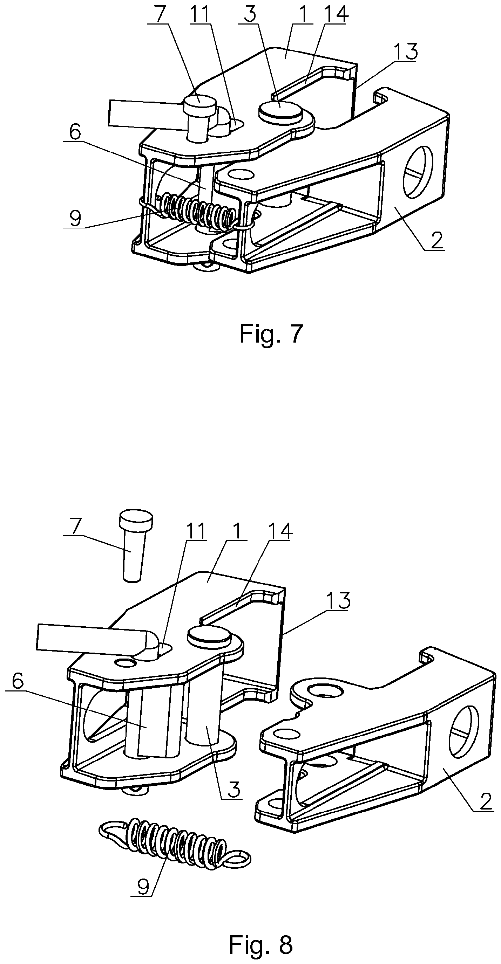

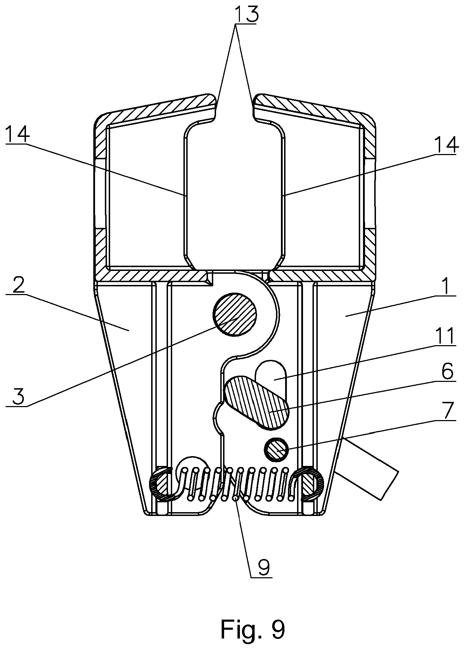

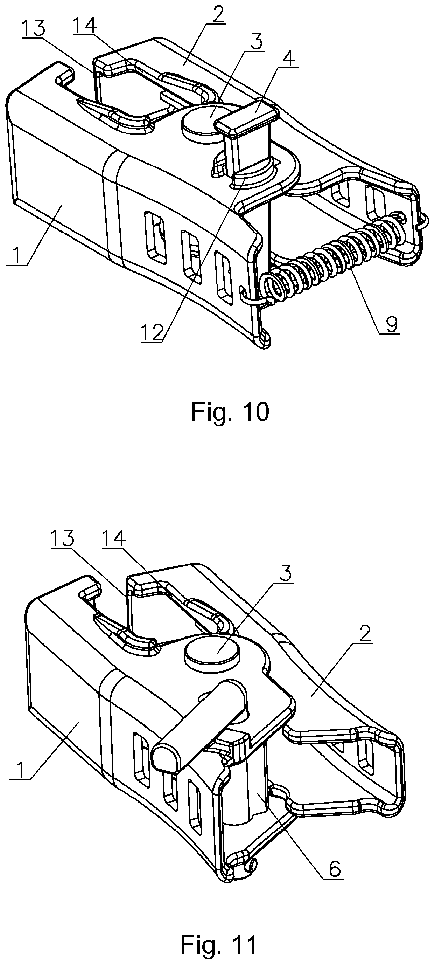

Referring to Figs. 1-11, a connecting clamp for template assembling of the present invention is provided, comprising: a left clamp unit 1 and a right clamp unit 2, wherein the left clamp unit 1 is rotatably connected to the right clamp unit 2 through a shaft 3; clamping faces 13 and positioning-correction faces 14 corresponding to frames 101 of templates 10 are provided at front portions of both the left clamp unit 1 and the right clamp unit 2; a fixer is provided at rear portions of the left clamp unit 1 and the right clamp unit 2, wherein the fixer enables the front portions of the left clamp units 1 and the right clamp unit 2 to grip the frames 101 of the templates 10. The fixer may adapt different structures, the fixer comprises a hole 11 drilled at the rear position of the left clamp unit 1, and a wedge 4 being movable up and down and placed in the hole 11, wherein a side face of the wedge 4 is corresponding to the rear portion of the right clamp unit 2, which moves down with the wedge 4 for pushing the left clamp unit 1 and the right clamp unit 2 to rotate around the shaft 3, in such a manner that the front portions of the left clamp unit 1 and the right clamp unit 2 grip adjacent frames. Meanwhile, an opening of the hole 11 of the left clamp unit 1 extends upwards for forming a back plate 12 which limits the wedge 4 to move down. A pin hole 41 is drilled at a bottom portion of the wedge 4, and a pin 5 is installed in the pin hole 41 for preventing the wedge 4 from detaching from the hole 11. Alternatively, the fixer comprises a hole 11 drilled at the rear position of the left clamp unit 1, and a cam 6 being rotatable and placed in the hole 11, wherein the cam 6 rotates in the hole 11 for pushing the rear position of the right clamp unit 2 to rotate around the shaft 3, in such a manner that the front portion of the right clamp unit 2 grips adjacent frames. Meanwhile, a limiter 7 for limiting a rotating range of the cam 6 is placed at a side of the hole 11 on the left clamping unit 1. Also comprised in the present invention, is a reset device provided between the left clamp unit 1 and the right clamp unit 2 for keeping an opened state of the front portions when the fixer is activated. The reset device is a tension spring 9 installed between the left clamp unit 1 and the right clamp unit 2, wherein a first end of the tension spring 9 is mounted on the rear portion of the left clamp unit 1, and a second end of the tension spring 9 is mounted on the rear portion of the right clamp unit 1.

## Claims

1. A connecting clamp for construction formwork (10) assembling, comprising:
a left clamp unit (1) and a right clamp unit (2), wherein the left clamp unit (1) is rotatably connected to the right clamp unit (2) through a shaft (3);
clamping faces (13) and positioning-correction faces (14) corresponding to frames (101) of templates (10) provided at front portions of both the left clamp unit (1) and the right clamp unit (2);
a fixer (11,12,4,6,7) provided at rear portions of the left clamp unit (1) and the right clamp unit (2), wherein the fixer (11,12,4,6,7) enables the front portions of the left clamp units (1) and the right clamp unit (2) to grip the frames (101) of the templates (10); and
a reset device (9) provided between the left clamp unit (1) and the right clamp unit (2) for keeping an opened state of the front portions when the fixer is activated, the connecting clamp being **characterized in that** the reset device (9) is a tension spring (9) installed between the left clamp unit (1) and the right clamp unit (2), a first end of the tension spring (9) being mounted to the rear portion of the left clamp unit (1), and a second end of the tension spring (9) being mounted to the rear portion of the right clamp unit (1).

2. The connecting clamp, as recited in claim 1, wherein the fixer (11,12,4,6,7) comprises a hole (11) drilled at the rear position of the left clamp unit (1), and a wedge (4) being movable up and down and placed in the hole (11), wherein a side face of the wedge (4) is corresponding to the rear portion of the right clamp unit (2), which moves down with the wedge (4) for pushing the left clamp unit (1) and the right clamp unit (2) to rotate around the shaft (3), in such a manner that the front portions of the left clamp unit (1) and the right clamp unit (2) grip adjacent frames (101).

3. The connecting clamp, as recited in claim 2, wherein an opening of the hole (11) of the left clamp unit (1) extends upwards for forming a back plate (12) which limits the wedge (4) to move down.

4. The connecting clamp, as recited in claim 2, wherein a pin hole (41) is drilled at a bottom portion of the wedge (4), and a pin (5) is installed in the pin hole (41) for preventing the wedge (4) from detaching from the hole (11).

5. The connecting clamp, as recited in claim 1, wherein the fixer comprises a hole (11) drilled at the rear position of the left clamp unit (1), and a cam (6) being rotatable and placed in the hole (11), wherein the cam (6) rotates in the hole (11) for pushing the rear position of the right clamp unit (2) to rotate around the shaft (3), in such a manner that the front portion of the right clamp unit (2) grips adjacent frames.

6. The connecting clamp, as recited in claim 5, wherein a limiter (7) for limiting a rotating range of the cam (6) is placed at a side of the hole (11) on the left clamping unit (1).

## Patentansprüche

1. Anschlussklemme für das Zusammenbauen von Schalungen (10), umfassend:
eine linke Klemmeinheit (1) und eine rechte Klemmeinheit (2), wobei die linke Klemmeinheit (1) mit der rechten Klemmeinheit (2) durch eine Welle (3) drehbar verbunden ist;
wobei Klemmflächen (13) und Positionskorrekturflächen (14) Rahmen (101) von Vorlagen (10) entsprechen, welche auf vorderen Abschnitten der linken Klemmeinheit (1) und der rechten Klemmeinheit (2) bereitgestellt sind;
ein Befestigungsmittel (11, 12, 4, 6, 7), welches an hinteren Abschnitten der linken Klemmeinheit (1) und der rechten Klemmeinheit (2) bereitgestellt ist, wobei das Befestigungsmittel (11, 12, 4, 6, 7) den vorderen Abschnitten der linken (1) und der rechten (2) Klemmeinheiten ermöglicht, die Rahmen (101) der Vorlagen (10) zu ergreifen; und
eine Rücksetzvorrichtung (9), welche zwischen der linken Klemmeinheit (1) und der rechten Klemmeinheit (2) bereitgestellt ist, um einen geöffneten Zustand der vorderen Abschnitte aufrechtzuerhalten, wenn das Befestigungsmittel aktiviert ist, wobei die Anschlussklemme **dadurch gekennzeichnet ist, dass** die Rücksetzvorrichtung (9) eine Zugfeder (9) ist, welche zwischen der linken Klemmeinheit (1) und der rechten Klemmeinheit (2) montiert ist, wobei ein erstes Ende der Zugfeder (9) am hinteren Abschnitt der linken Klemmeinheit (1) und ein zweites Ende der Zugfeder (9) am hinteren Ende der rechten Klemmeinheit (1) montiert ist.

2. Anschlussklemme nach Anspruch 1, wobei das Befestigungsmittel (11, 12, 4, 6, 7) ein Loch (11), welches in einer hinteren Position der linken Klemmeinheit (1) gebohrt ist und einen Keil (4) umfasst, welcher nach oben und nach unten bewegbar ist und in dem Loch (11) angeordnet ist, wobei eine Seitenfläche des Keils (4) dem hinteren Abschnitt der rechten Klemmeinheit (2) entspricht, welche sich mit dem Keil (4) nach unten bewegt, um die linke Klemmeinheit (1) und die rechte Klemmeinheit (2) zu zwingen sich um die Welle (3) zu drehen, sodass die vorderen Abschnitte der linken Klemmeinheit (1) und der rechten Klemmeinheit (2) angrenzende Rahmen (101) ergreifen.

3. Anschlussklemme nach Anspruch 2, wobei eine Öffnung des Lochs (11) der linken Klemmeinheit (1) sich nach oben erstreckt, um eine Rückplatte (12) zu bilden, welche die Bewegung des Keils (4) nach unten begrenzt.

4. Anschlussklemme nach Anspruch 2, wobei ein Nadelloch (41) in einem unteren Abschnitt des Keils (4) gebohrt wird, und eine Nadel (5) in das Nadelloch (41) montiert wird, um zu verhindern, dass sich der Keil (4) vom Loch (11) löst.

5. Anschlussklemme nach Anspruch 1, wobei das Befestigungsmittel ein Loch (11), welches in einer hinteren Position der linken Klemmeinheit (1) gebohrt ist, und eine Nocke (6) umfasst, welche drehbar ist und in dem Loch (11) angeordnet ist, wobei sich die Nocke (6) im Loch (11) dreht, um die hintere Position der rechten Klemmeinheit (2) dazu zu zwingen, sich um die Welle (3) so zu drehen, dass der vordere Abschnitt der rechten Klemmeinheit (2) angrenzende Rahmen ergreift.

6. Anschlussklemme nach Anspruch 5, wobei ein Begrenzer (7) zum Begrenzen eines Drehbereichs der Nocke (6) auf einer Seite des Lochs (11) auf der linken Klemmeinheit (1) angeordnet ist.

## Revendications

1. Pince de fixation destinée à l'assemblage de coffrages de construction (10), comprenant :
une unité de pince de gauche (1) et une unité de pince de droite (2), l'unité de pince de gauche (1) étant reliée de manière rotative à l'unité de pince de droite (2) par l'intermédiaire d'une tige (3) ;
des faces de serrage (13) et des faces de correction du positionnement (14), correspondant à des cadres (101) de gabarits (10), prévues aux parties avant de l'unité de pince de gauche (1) et de l'unité de pince de droite (2) ;
un élément de fixation (11, 12, 4, 6, 7), prévu aux parties arrière de l'unité de pince de gauche (1) et de l'unité de pince de droite (2), l'élément de fixation (11, 12, 4, 6, 7) permettant aux parties avant de l'unité de pince de gauche (1) et de l'unité de pince de droite (2) de saisir les cadres (101) des gabarits (10) ; et
un dispositif de rappel (9) prévu entre l'unité de pince de gauche (1) et l'unité de pince de droite (2) pour maintenir un état ouvert des parties avant lorsque l'élément de fixation est actionné, la pince de fixation étant **caractérisée en ce que** le dispositif de rappel (9) est un ressort de tension (9) installé entre l'unité de pince de gauche (1) et l'unité de pince de droite (2), une première extrémité du ressort de tension (9) étant montée sur la partie arrière de l'unité de pince de gauche (1), et une seconde extrémité du ressort de tension (9) étant montée sur la partie arrière de l'unité de pince de droite (1).

2. Pince de fixation selon la revendication 1, dans laquelle l'élément de fixation (11, 12, 4, 6, 7) comprend un trou (11) foré à la position arrière de l'unité de pince de gauche (1), et une cale (4) pouvant être déplacée vers le haut et vers le bas et placée dans le trou (11), une face latérale de la cale (4) correspondant à la partie arrière de l'unité de pince de droite (2), qui se descend avec la cale (4) pour amener l'unité de pince de gauche (1) et l'unité de pince de droite (2) à tourner autour de la tige (3), de manière que les parties avant de l'unité de pince de gauche (1) et de l'unité de pince de droite (2) saisissent des cadres adjacents (101).

3. Pince de fixation, selon la revendication 2, dans laquelle une ouverture du trou (11) de l'unité de pince de gauche (1) s'étend vers le haut pour former une plaque arrière (12) qui limite la descente de la cale (4) .

4. Pince de fixation, selon la revendication 2, dans laquelle un trou de cheville (41) est foré au niveau d'une partie inférieure de la cale (4), une cheville (5) étant installée dans le trou de cheville (41) pour empêcher la cale (4) de sortir du trou (11).

5. Pince de fixation, selon la revendication 1, dans laquelle l'élément de fixation comprend un trou (11) foré au niveau de la position arrière de l'unité de pince de gauche (1), et une came (6) rotative et placée dans le trou (11), la came (6) tournant dans le trou (11) pour amener la position arrière de l'unité de pince de droite (2) à tourner autour de la tige (3), de manière que la partie avant de l'unité de pince de droite (2) saisisse des cadres adjacents.

6. Pince de fixation, selon la revendication 5, dans laquelle un élément de limitation (7), permettant de limiter une plage de rotation de la came (6), est placé à côté du trou (11) de l'unité de pince de gauche (1).
